# EUROPEAN PATENT APPLICATION

(11) **EP 4 836 346 A2**
(43) Date of publication of application: **04.11.2026**
(21) Application number: 26205089.1
(22) Date of filing: 16.08.2023
(51) Int. Cl.: H04L 9/00

(54) **ENFORCING CONSTRAINTS ON BLOCKCHAIN TRANSACTIONS**

(30) Priority: 23.09.2022 GB 202213926
(62) Document number(s) of the earlier application(s) in accordance with Art. 76 EPC: 23757275.5 / 4 591 506
(71) Applicant: nChain Licensing AG, 6300 Zug (CH)
(72) Inventor: LARRAIA, Enrique, London W1W 8AP (GB)
(74) Representative: Page White Farrer

(57) **Abstract**

A computer-implemented method for enforcing constraints on a blockchain transaction, wherein the method is performed by a first party and comprises: generating an enforcement locking script for inclusion in a first output of a first blockchain transaction, wherein the enforcement locking script comprises a commitment sub-script, and a constraint sub-script comprising a verification key, and wherein when executed together with an unlocking script of a second blockchain transaction, the unlocking script comprising a transaction commitment and a constraint proof, the enforcement locking script is configured such that: the commitment sub-script is configured to verify that the transaction commitment corresponds to the second blockchain transaction; and the constraint sub-script is configured to use the verification key to verify that the constraint proof provides proof that a committed blockchain transaction satisfies one or more constraints.

## Description

### TECHNICAL FIELD

The present disclosure relates to method of using a blockchain transaction to enforce constraints on a future blockchain transaction.

### BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs.

Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

### SUMMARY

It is generally known that conditions can be enforced on the fields of a spending transaction, i.e. a transaction that spends (unlocks, assigns, transfers, etc.) an output of a previous transaction. For instance, the previous transaction may include a locking script that imposes a condition on one or more outputs of the spending transaction. Note that the term "spending transaction" is used in the art to mean a current transaction that unlocks at least one output of at least one previous transaction, and does not necessarily mean that the current transaction is related to a financial transaction.

One reason for wanting to enforce conditions on the fields of a spending transaction is to ensure that the spending transaction has an output that includes the same locking script as the previous transaction. In that way, one can ensure that the spending transaction enforces the same conditions on the next spending transaction. That is, the n-1th transaction includes a locking script that forces the nth transaction to include the same locking script, which therefore forces the n+1th transaction to include the same locking script. In this way, a chain of transactions is created whereby each transaction includes the same locking script. This may be used in the context of digital tokens that, for example, represent ownership of real world objects, or even objects in a virtual world. This is advantageous as it means that each transfer of the token is subject to the same rules.

Previous attempts at forcing a chain of transactions to include the same locking script suffer from at least one of the following problems. First, some attempts require a verifier to trace back to the first transaction in the chain (e.g. an "issuance transaction") to ensure that the first transaction was created correctly (e.g. by a particular authority, such as a token issuer) or that the locking script included in the most recent transaction is the same as the locking script that was included in the first transaction and every other transaction in the chain. This consumes the verifier's resources (both in terms of computational resources, time and effort) in validating the latest transaction in the chain. Secondly, some attempts require a third party to be involved in the creation and/or validation of the next transaction in the chain (e.g. the transferring of a token) to ensure that the next transaction is created correctly. This undermines the trust-less nature of a blockchain by relying on a third party, and increases the number of parties that must interact with one another, which reduces efficiency. Thirdly, as discussed below, some attempts at forcing a chain of transactions to include the same locking script require the latest transaction in the chain to include each previous transaction in the chain, thus introducing a transaction bloat problem. This is problematic for both the transmission and storage of transactions. Fourthly, some attempts are susceptible to replay attacks.

Previous attempts to impose conditions on future spending transactions involve injecting the spending transaction to the stack of the blockchain scripting engine so as to conduct business logic on the transaction that is being validated by the blockchain node. One technique for forcing an unlocking script to contain such a message is known in the art as PUSHTX, which is a pseudo-opcode, i.e. a combination of opcodes configured to perform a particular function. PUSHTX is described in UK patent application GB2112930.9.

The so-called *PUSHTX* mechanism embeds (i.e. injects) a copy of the sighash fields of the spending transaction in its unlocking script. Leveraging the opcode OP_CHECKSIG, one can develop verification logic in the locking script (of the parent transaction) to ensure the injected copy corresponds to the spending transaction. It is also possible to inject ancestors of the transaction, but it is necessary to embed all fields (including the unlocking script) of the ancestor in the unlocking script of the spending transaction. In some cases this technique may not be appropriate. For example, iterative injections of the parent transaction render transactions whose size rapidly blows up because the unlocking script accumulates all previous transactions.

The present disclosure provides a mechanism that imposes structure (i.e. conditions, constraints, etc.) on the spending transactions and/or its ancestors, without pushing the spending transaction to the stack. This solves the transaction bloat problem. Embodiments of the present disclosure also solve one or more of the other problems previously discussed.

According to one aspect disclosed herein, there is provided a computer-implemented method for enforcing constraints on a blockchain transaction, wherein the method is performed by a first party and comprises: generating an enforcement locking script for inclusion in a first output of a first blockchain transaction, wherein the enforcement locking script comprises a commitment sub-script , and a constraint sub-script comprising a verification key, and wherein when executed together with an unlocking script of a second blockchain transaction, the unlocking script comprising a transaction commitment and a constraint proof, the enforcement locking script is configured such that: the commitment sub-script is configured to verify that the transaction commitment corresponds to the second blockchain transaction; and the constraint sub-script is configured to use the verification key to verify that the constraint proof provides proof that a committed blockchain transaction satisfies one or more constraints.

According to another aspect disclosed herein, there is a computer-implemented method of generating a blockchain transaction that satisfies constraints, wherein a first blockchain transaction comprises an output comprising an enforcement locking script, wherein the enforcement locking script comprises a transaction commitment sub-script, and a constraint enforcement sub-script comprising a verification key, and wherein the commitment sub-script is configured to verify that a candidate transaction commitment corresponds to a candidate blockchain transaction, and the constraint sub-script is configured to use the verification key to verify that a candidate constraint proof provides proof that the candidate blockchain transaction satisfies one or more constraints, wherein the method is performed by a second party and comprises: generating at least part of a second blockchain transaction, the second blockchain comprising an input referencing the output of the first blockchain transaction, and wherein the second blockchain transaction satisfies the one or more constraints; generating a transaction commitment based on said at least part of the second blockchain transaction; generating a constraint proof based on the second blockchain transaction, wherein the constraint proof provides proof that the second blockchain transaction satisfies the one or more constraints; and including the transaction commitment and the constraint proof in an unlocking script of the input of the second blockchain transaction.

A locking script (referred to as an "enforcement locking script") is used to enforce conditions (i.e. constraints, restrictions, etc.) on a future transaction attempting to unlock the output containing the enforcement locking script, i.e. the spending transaction. The locking script contains at least two sub-scripts, i.e. portions of the overall locking script. A first portion (referred to as a "commitment sub-script" or a "succinct transaction integrity mechanism") is used to verify that a transaction commitment (i.e. a string), provided in an unlocking script of the spending transaction, is the binding commitment of (the sighash serialization of) the spending transaction . In some examples, the transaction commitment is a hash digest or digital signature generated based on the spending transaction. A second portion (referred to as a "constraint sub-script") is used to verify that the spending transaction (i.e. the committed transaction) satisfies one or more constraints. This is done without requiring the spending transaction (or fields of the spending transaction) to be included in the unlocking script of the spending transaction. In other words, the effect is that the sighash serialization of the spending transaction does not need to be included in the unlocking script of the spending transaction. Instead the unlocking script contains its commitment, whose size is short and independent of the transaction size

Some embodiments of the present disclosure employ succinct non-interactive zero-knowledge arguments (SNARKs) to prove off-chain that the structure of the transaction is constrained as per the business logic. This generates a short (succinct) proof that can be embedded as part of the unlocking script and verified on-chain. The constraint sub-script part of the enforcement locking script (that contains the logic to verify the proof) may be large, but it is of constant size and independent of the size of the spending transaction. This, together with short commitments, solves the aforementioned transaction bloat problem. As already explained, these embodiments require more than simply applying general-purpose SNARKs. A direct application would require the verification algorithm receive, as input, the spending transaction that is being validated, thus re-introducing again the bloat problem. To overcome this, SNARKs are combined with succinct transaction integrity mechanisms that can be verified on-chain. A concrete instantiation of this type of integrity checks uses so-called "dummy signatures" as described in UK patent application GB2206039.6. The resulting mechanism of these embodiments is referred to as *REFTX* for 'reference transaction'.

REFTX is not limited by the expressiveness of the blockchain scripting language to impose structure on the spending transaction or on its ancestors (as opposed to PUSHTX). Indeed, REFTX operates mostly off-chain. Further, it allows to enforce a rich class of constraints (due to the use of general-purpose SNARKs). The only requirement is that such constraints can be expressed as a program that can be verified by a SNARK. This covers almost any feasible computation one can think of.

The REFTX mechanism may be used to implement a non-fungible token (NFT) scheme, whereby transferring ownership of tokenized assets is governed by locking. Ownership transfers are controlled by an NFT program that imposes constraints on previous transactions to ensure the spending transaction can be traced back to the issuance or mint transaction that contains the token.

### BRIEF DESCRIPTION OF THE DRAWINGS

To assist understanding of embodiments of the present disclosure and to show how such embodiments may be put into effect, reference is made, by way of example only, to the accompanying drawings in which:
Figure 1 is a schematic block diagram of a system for implementing a blockchain;
Figure 2 schematically illustrates some examples of transactions which may be recorded in a blockchain;
Figure 3 schematically illustrates an example system for enforcing conditions on blockchain transactions;
Figure 4 schematically illustrates an example of a first transaction enforcing conditions on a second transaction;
Figure 5 schematically illustrates some example transactions for issuing and minting a blockchain-based token;
Figure 6 schematically illustrates some example transactions for trading a token with two funding transactions, where *PK*₁,*PK*₂ are controlled by the receiver, *PK*₃ is controlled by the sender, and f denotes the fee for the miner;
Figure 7 schematically illustrates some example transactions for trading a token with a royalty of 1% of the trade;
Figure 8 schematically illustrates some example transactions for minting two replica tokens, where the root of the token hash tree is hard-coded in the token program that validates transfers;
Figure 9 schematically illustrates example hash trees for encoding different editions of replica tokens; and
Figure 10 schematically illustrates some example transactions for trading unburnable tokens, where the unique funding UTXO *txid'*∥0 is unlocked with the same public key to which the token is sent.

### DETAILED DESCRIPTION OF EMBODIMENTS

### 1. EXAMPLE SYSTEM OVERVIEW

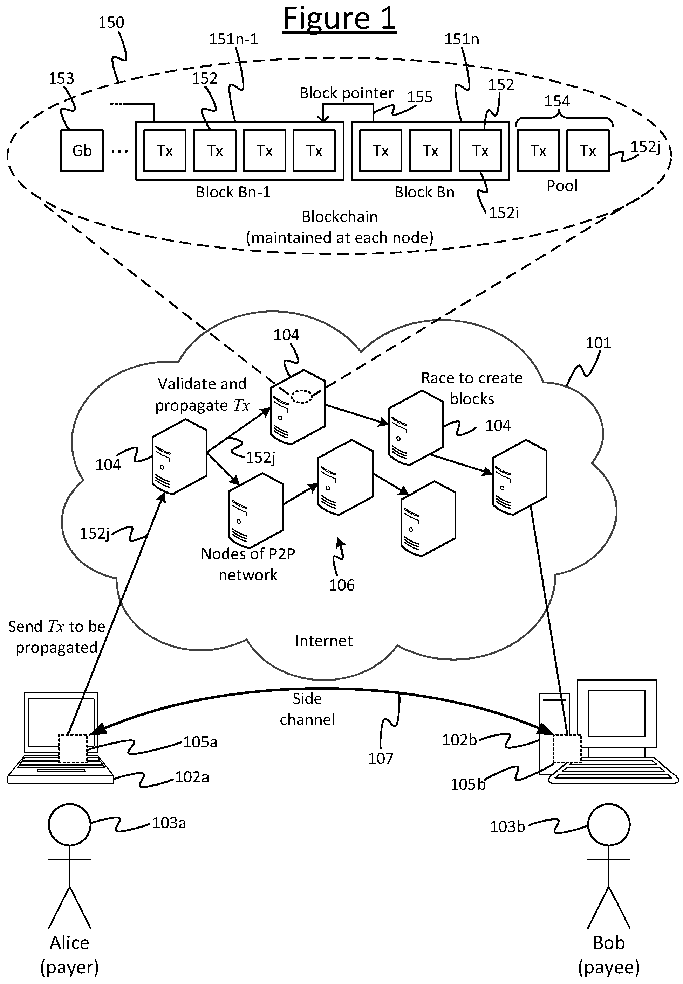

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. Spending or redeeming does not necessarily imply transfer of a financial asset, though that is certainly one common application. More generally spending could be described as consuming the output, or assigning it to one or more outputs in another, onward transaction. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction spends (or "assigns"), wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (or "spent") is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it spends or assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### 2. UTXO-BASED MODEL

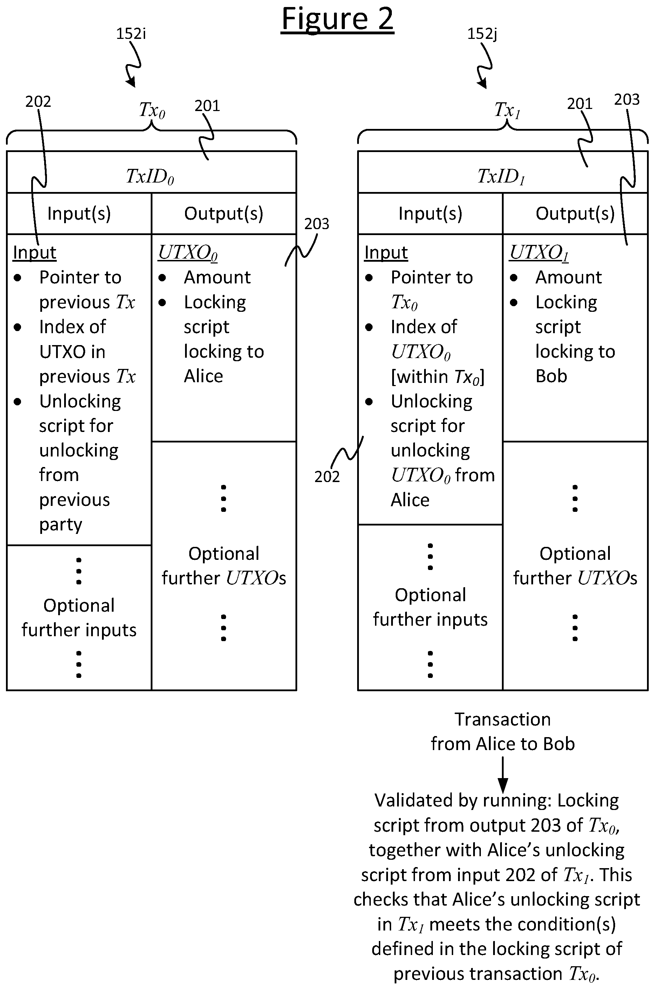

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "*Tx₁*". It takes an amount of the digital asset that is locked to Alice in the output 203 of a preceding transaction 152i in the sequence, and transfers at least some of this to Bob. The preceding transaction 152i is labelled *"Tx₀*" in Figure 2. *Tx₀* and *Tx₁* are just arbitrary labels. They do not necessarily mean that *Tx₀* is the first transaction in the blockchain 151, nor that *Tx₁* is the immediate next transaction in the pool 154. *Tx₁* could point back to any preceding (i.e. antecedent) transaction that still has an unspent output 203 locked to Alice.

The preceding transaction *Tx₀* may already have been validated and included in a block 151 of the blockchain 150 at the time when Alice creates her new transaction *Tx₁*, or at least by the time she sends it to the network 106. It may already have been included in one of the blocks 151 at that time, or it may be still waiting in the ordered set 154 in which case it will soon be included in a new block 151. Alternatively *Tx₀* and *Tx₁* could be created and sent to the network 106 together, or *Tx₀* could even be sent after *Tx₁* if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction *Tx₀* comprises a particular UTXO, labelled here *UTXO₀*. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, *UTXO₀* in the output 203 of *Tx₀* comprises a locking script [Checksig *P_{A}*] which requires a signature Sig *P_{A}* of Alice in order for *UTXO₀* to be redeemed (strictly, in order for a subsequent transaction attempting to redeem *UTXO₀* to be valid). [Checksig *P_{A}*] contains a representation (i.e. a hash) of the public key *P_{A}* from a public-private key pair of Alice. The input 202 of *Tx₁* comprises a pointer pointing back to *Tx₁* (e.g. by means of its transaction ID, *TxID₀*, which in embodiments is the hash of the whole transaction *Tx₀*). The input 202 of *Tx₁* comprises an index identifying *UTXO₀* within *Tx₀*, to identify it amongst any other possible outputs of *Tx₀*. The input 202 of *Tx₁* further comprises an unlocking script <Sig *P_{A}*> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction *Tx₁* arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:
<Sig *P_{A}*> <*P_{A}*> || [Checksig *P_{A}*]
where "||" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key *P_{A}* of Alice, as included in the locking script in the output of *Tx₀*, to authenticate that the unlocking script in the input of *Tx₁* contains the signature of Alice signing the expected portion of data. The expected portion of data itself (the "message") also needs to be included in order to perform this authentication. In embodiments the signed data comprises the whole of *Tx₁* (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in *Tx₁* meets the one or more conditions specified in the locking script of *Tx₀* (so in the example shown, if Alice's signature is provided in *Tx₁* and authenticated), then the blockchain node 104 deems *Tx₁* valid. This means that the blockchain node 104 will add *Tx₁* to the ordered pool of pending transactions 154. The blockchain node 104 will also forward the transaction *Tx₁* to one or more other blockchain nodes 104 in the network 106, so that it will be propagated throughout the network 106. Once *Tx₁* has been validated and included in the blockchain 150, this defines *UTXO₀* from *Tx₀* as spent. Note that *Tx₁* can only be valid if it spends an unspent transaction output 203. If it attempts to spend an output that has already been spent by another transaction 152, then *Tx₁* will be invalid even if all the other conditions are met. Hence the blockchain node 104 also needs to check whether the referenced UTXO in the preceding transaction *Tx₀* is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in *UTXO₀* in *Tx₀* can be split between multiple UTXOs in *Tx₁*. Hence if Alice does not want to give Bob all of the amount defined in *UTXO₀*, she can use the remainder to give herself change in a second output of *Tx₁*, or pay another party.

In practice Alice will also usually need to include a fee for the bitcoin node 104 that successfully includes her transaction 104 in a block 151. If Alice does not include such a fee, *Tx₀* may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to *UTXO₀* is the only input to *Tx₁,* and *Tx₁* has only one output *UTXO₁.* If the amount of the digital asset specified in *UTXO₀* is greater than the amount specified in *UTXO₁,* then the difference may be assigned (or spent) by the node 104 that wins the proof-of-work race to create the block containing *UTXO₁.* Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key *P_{A}*. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

### 3. SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

### 4. SNARKS

Let a binary program *P*(*x*; *w*) = *b* ∈ {0,1} that takes as public input a bitstring *x* (the instance) and as private input another bitstring *w* (the witness) and it outputs a decision bit *b*. We say *P* correctly executes if *b* = 1.

A pre-proccessing succinct non-interactive argument system of knowledge (SNARK) for correct execution of a program *P* is a triplet of algorithms ***SNARK*** ≔ (***Setup, Prove, Verify***) such that:
***Setup***(*λ*, *P*) → (*ek*, *vk*): On input of a security parameter *λ* and the description of a program *P* it outputs a pair of evaluation and verification keys.
*Prove(ek, x, w)* → *π*: On input of the evaluation key, the public input *x* and the private input *w* it outputs a proof *π*
***Verify***(*vk, x, π*) → *b* ∈ {*accept, reject*}: On input of the verification key, the public input *x* and the proof *π* it either accepts or rejects the proof.

The SNARK is *complete* if the verifier always accepts proofs *π* generated by the prover *SNARK. prove* on input pairs (*x, w*) of public/private inputs that make the program *P* accept. It is *sound* if for all public inputs *x* for which there is no private input *w* that makes *P* accept, the verifier rejects any proof *π* for *x* with very high probability. More formally, the scheme is sound if for all probabilistic polynomial-time algorithms 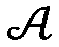 (capturing possible cheating provers) it holds:

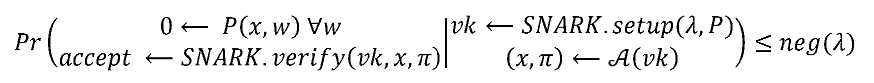

Observe that the verification key must be generated honestly with the setup algorithm. If in addition it is possible to efficiently compute (extract) a witness from a valid proof *π* and the randomness that (a possibly cheating) prover 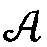 used to generate *π* (up to some negligible error - the knowledge error), then the proof is said to be *knowledge sound.*

The proof is 'short'. This means that it is logarithmic in the size of the private input *w*. More concretely, it has size *poly*(*λ*)*polylog*(|*w*|) where recall *λ* is a security parameter. The system has *succinct verification* (sometimes also referred as fully succinct) if, besides short proofs, the verifier runtime is 'fast'. That is, it is logarithmic in both the size of the program *P* and the size of the private input *w*. Thus, if the runtime takes *poly*(*λ*)*polylog*((|*x*| *+* |*w*|) steps.

### 4.1 On-chain SNARK verification

Embodiments of the present disclosure may utilise a SNARK scheme that can be verified on-chain, i.e. during script execution. For a given SNARK scheme there exists a script [SNARK verify] that implements the verifier *SNARK.verify.* For example, for pairing-based SNARKs the verifier consists of evaluating a small number of pairings over an elliptic curve. A pairing can be implemented using the set of finite field arithmetic opcodes built in the BSV scripting language. For hash-based SNARKs the verifier can be implemented mainly with the opcode OP_SHA256.

In any case, the verification script takes as input the proof *π,* the public input *x* and the verification key *vk* and pushes to the top of the stack either one (accept) or zero (reject).

Thus, we require that *<π> <x> <vk>* [SNARK verify] pushes "True" to the top of the stack if *accept* ← *SNARK.verify(vk, x, π*)*.* Else it pushes "False" (either zero or negative zero).

### 5. SUCCINCT TRANSACTION INTEGRITY - STI MECHANISM

A STI mechanism is a binding commitment of a transaction. It comprises two algorithms ***STI* :*=* (*commit, verify*)**
*commit(tx)* → *τₜₓ* ∈ {0,1}*^{λ}* : On input a transaction, outputs a commitment tag *τₜₓ* of size *λ*.
*verify*(*tx, τₜₓ*) → {*accept, reject*}: On input a commitment key, a transaction and a tag, either accepts or rejects.

The mechanism is complete if *accept* ← *verify*(*tx, commit*(*tx*))*.* It is binding if it is unfeasible to create two transactions with the same tag. Thus, for any probabilistic algorithm 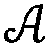 the following holds: $Pr \left(\begin{matrix}tx \neq tx ′ & \\ accept ← STI . verify \left(tx, {τ}_{tx}\right) & {τ}_{tx} , tx , tx ′ ← A \left(λ\right) \\ accept ← STI . verify \left(tx′,{τ}_{tx}\right) & \end{matrix}\right) \leq neg \left(λ\right)$

The STI mechanism checks the integrity of the spending transaction *succinctly.* By this we mean that neither the size of the script that verifies the integrity of the spending transaction nor the arguments of the script depend on the size of the spending transaction.

### 5.1 On-chain succinct verification

Embodiments of the present disclosure may utilise an STI mechanism that can be verified on-chain, i.e. during script execution.

The STI mechanism is required to be succinct in the following sense:
i. The locking script of the parent transaction contains as a subroutine a script [STI verify] such that *<τₜₓ>* [STI verify] pushes "True" to the stack if and only if *STI.verify(stx, τₜₓ*) accepts. Here *stx* denotes the spending transaction.
ii. The size of [STI verify] is independent of the size of the spending transaction. Concretely, |[STI verify]| ∈ 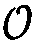 (*λ*), where *λ* is a security parameter.
iii. The size of the tag is independent of the size of the spending transaction. Concretely |*τₜₓ*| ∈ 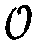 (*λ*)*.*

To verify a commitment tag *τₜₓ* the spending transaction *tx* cannot be pushed to the stack. Otherwise, it would violate either the second or the third property above.

### 5.1.2 Example on-chain STI mechanism

UK patent application GB2206039.6 describes a "dummy signature mechanism" which involves generating a 'dummy' ECDSA signature over the secp256k1 curve with signing key *sk* and ephemeral key *k* set to one, *sk = k* = 1. The message is hashed before signing. So, if we see SHA256 as a random function, we get the binding property.

In this case the output of *STI.commit* is set to the signature generated according to the above process: ${τ}_{tx} ← STI . commit \left(tx\right) : = ECDSA . sign \left(sk:=1,k:=1,SHA256\left(tx\right)\right) .$

The corresponding verification script is defined as: $\left[STI verify\right] : = \left〈G\right〉 OP_CHECKSIGVERIFY .$

Thus, *<τₜₓ>* [STI verify] either accepts *τₜₓ* as a valid commitment tag for the spending transaction or rejects it and aborts any subsequent logic execution.

Note that what is passed as input to the ECDSA signing algorithm is the SIGHASH serialization of the spending transaction *tx*. Depending on the SIGHASH byte, some fields of *tx* will not be signed, and hence its integrity is not guaranteed.

### 6. ENFORCING CONSTRAINTS

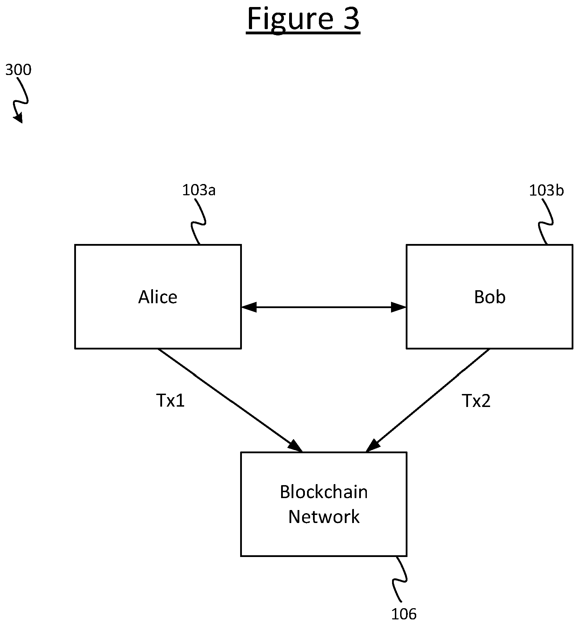

Embodiments of the present disclosure enable constraints to be enforced on spending transaction. Figure 3 illustrates an example system 300 for implementing these embodiments. The example system 300 includes a first party, a second party, and one or more blockchain nodes 104 of a blockchain network 10. In this example the first party is shown as Alice 103a and the second party is shown as Bob 103b. It will be appreciated that this is merely for convenience.

Alice 103a is configured to generate a first transaction, where the first transaction includes a first output comprising a first locking script. The first locking script comprises logic for enforcing conditions on a second transaction generated by Bob 103b, where the second transaction contains a first input comprising a first unlocking script. The first input of the second transaction references the first output of the first transaction. Note that "first", "second", etc. are being used merely as labels, and do not necessarily mean that, say, the first output is the initial, logically first, output of the transaction, although that is a possibility.

The first locking script (also referred to as an enforcement locking script) comprises a first sub-script (also referred to as a commitment sub-script) and a second sub-script (also referred to as a constraint sub-script). The commitment sub-script may comprise a commitment key that is used to verify a transaction commitment. The constraint sub-script comprises a verification key that is used to verify a constraint proof. The transaction commitment and constraint proof are generated by Bob 103b and provided in the unlocking script of the second (spending) transaction that it used to unlock the enforcement locking script. Note that Alice 103a may generate the enforcement locking script herself, or she may receive it from a third party.

The transaction commitment generated by Bob 103b is a commitment to the second transaction. It is generated based on the second transaction. The commitment sub-script is configured to verify that the transaction commitment has been generated based on the second transaction. In some examples, a commitment key is used to verify the transaction commitment. The commitment key may be a public key, and the transaction commitment may be a digital signature generated using a private key corresponding to the public key. In some examples, the private key is the integer one. A signature generated using a private key set equal to one is referred to herein as a "dummy signature".

The commitment sub-script may, upon verifying that the transaction commitment is indeed generated based on the second transaction, supply the transaction commitment to the constrain sub-script. The constraint sub-script may then use the transaction commitment as part of its input verification of the constraint proof.

The constraint proof generated by Bob 103b provides verifiable proof that the second (committed) transaction satisfies one or more constraints. The constraints may be hard-coded by the constraint sub-script. The constraint sub-script is configured to verify, using the verification key, that the constraint proof does indeed prove that the constraints have been met. In some examples, the constraints may be hard-coded by a public input, i.e. an input that appears in the locking script and is pushed to the stack during execution. It is also not excluded that the public input may be included in the unlocking script of the second transaction. In these examples the constraint sub-script may use the public input to verify that the constraint proof provides proof that the second transaction satisfies the constraints.

In some examples, the verification key has a corresponding evaluation key, and Bob 103b uses the evaluation key to generate the constraint proof. In these examples, the constraint sub-script may use the verification key to verify that the constraint proof has been generated using the evaluation key. Alice 103a may send the evaluation key to Bob 103b.

The proof and verification of the proof may make use of a non-interactive zero-knowledge verification algorithm, also referred to as a SNARK. Any suitable SNARK may be used. The constraint proof may be generated using a proving algorithm of the SNARK. The proof may be verified using a verification algorithm of the SNARK. Thus in these example the constraint sub-script is configured to implement the verification algorithm of the SNARK. Bob 103b executes the proving algorithm off-chain, e.g. using the evaluation key.

In general, the constraints enforced by the enforcement locking script may impose a restriction on one or more inputs of the second transaction and/or one or more outputs of the second transaction. This may include imposing restrictions on the number of inputs and/or outputs, the form of the inputs and/or outputs, and/or the content of the inputs and/or outputs.

As an example, the second transaction may be required to have an output that includes some or all of the enforcement locking script. The output of the second transaction may be required to include an exact copy of the enforcement locking script. Alternatively, at least some of the enforcement locking script may be neglected, or swapped with alternative data. For example, the enforcement locking script may comprise one or more variables (e.g. public keys and/or public key hashes), which may be replaced with alternative variables of the same type. E.g. a public key may be swapped with a different public key.

As another example, one of the enforced constraints may be that the second transaction has an input that references a particular output of a particular previous transaction, or any output a particular previous transaction. Additionally or alternatively, one of the enforced constraints may be that the second transaction links back, via one or more previous transactions, to a particular previous transaction. In other words, the second transaction must belong to a chain of transactions having a predetermined ancestor. In the context of tokens, the second transaction may be required to link back to a token minting or token issuance transaction which comprises token metadata defining a token, e.g. an NFT.

In some examples, a token issuance transaction comprises the token metadata for the first time. The first transaction may be a token mint transaction that enforces conditions of a token protocol, via the enforcement locking script, and transfers ownership of the token to a particular party (e.g. Alice 103a or Bob 103b). The second transaction may be a token transfer transaction that transfers ownership of the token to another party (e.g. Bob 103b). Alternatively, the first transaction may be a token transfer transaction that is linked back to the token mint transaction.

The enforcement locking script may include a transfer sub-script. The transfer sub-script may be locked to a public key or public key hash, and require the unlocking script of the second transaction to include a signature corresponding to the public key. For example, the transfer sub-script may comprise a pay-to-public-key (P2PK) script or pay-to-public-key-hash (P2PKH) script. In the context of tokens, the public key may be associated with the new recipient (owner) of the token, e.g. Bob 103b. In this case Bob 103b may generate a signature based on the second transaction, using a private key corresponding to his public key and include the signature in the unlocking script of the second transaction.

In some examples, the second transaction includes an output locked to a particular public key, e.g. public key associated with Alice 103a or Bob 103b. In the context of tokens, this may be used to facilitate a fair trade, such that Alice 103a is guaranteed payment for transferring a token to Bob 103b5.2.

Similarly, the second transaction may be required to include an output that is locked to the same public key to which an output referenced by an input of the second transaction is locked. In other words, the second transaction has an input that references a previous output, where that previous output is locked to a public key. An output of the second transaction must be locked to the same public key. In the context of tokens, this may be used to ensure that the token cannot be burned.

In some examples, the second transaction may be required to include an output that locks a predetermined amount or percentage of the native blockchain token (i.e. the underlying digital asset of the blockchain, such as BSV). For example, the second transaction may include an output that locks a first amount (e.g. to a public key controlled by Bob 103b). The second transaction may be required to include an output that locks a second amount, which is either a predetermined amount, or a predetermined percentage of the first amount. The second amount may be locked to a public key controlled by Alice 103a, or a different party. In this example, the public key to which the second amount is locked may be fixed by the enforcement locking script, such that every future spending transaction locks an amount of the digital asset to the fixed public key. In the context of tokens, this may be used to enforce royalties paid to a token issuer. As discussed in the following sections, embodiments of the present disclosure may be used to issue a range of tokens, including limited edition tokens and unburnable tokens.

### 7. ENFORCING CONSTRAINTS SUCCINCTLY - REFTX MECHANISM

This section describes an example implementation of the embodiments described above.

### 7.1 Constraints as NP predicates

Let *P* be a program (constraint) that it is to prove correct execution of on public inputs (*stx, y*) and private input *w*. Here *stx* denotes the spending transaction. The predicate that it is to be shown to hold is:
Predicate ${P}_{P}^{\left(stx\right)}$*.*
*"Let a public string y, I know a witness w such that program P*((*y, stx*); *w*) = 1, *where stx is the spending transaction"*

The predicate ${P}_{P}^{\left(stx\right)}$ is always about the spending transaction *stx* and not about arbitrary (possibly off-chain) transactions.

The general predicate ${P}_{P}^{\left(stx\right)}$ may be materialized in several ways. For example (stated informally):
Programs *P* with explicit public strings *y* include:
   - *"The string y is the field "Field" of the spending transaction stx".*
   - Also, the spending transaction could be replaced by its i-th ancestor *"Let y* := *(y', i), the string y' is the field "Field" of the i-th ancestor spending transaction stx".*
   - Or more complex statements like *"Let string y* :*=* (*y*₁, *y*₂), *the spending transaction stx has two outputs, the locking script of the first output is a P2PK with public key y*₁, *and the locking script of the second output contains y*₂ *as op-return data"*
Programs with empty public strings *y* include:
   - *"The spending transaction stx has three outpoints"*
   - *"The locking scripts of the first output of the spending transaction stx and the locking script of the transaction referenced in its first outpoint are identical".*

### 7.2 Proving predicates succinctly

As currently defined, the predicate ${P}_{P}^{\left(stx\right)}$ above (parameterized with the program P), defines the spending transaction *stx* as part of its public input. This means that the on-chain SNARK verifier also takes *stx* as input, and therefore it must be on the stack (no succinctness). Another issue is that we need to make sure that the transaction *tx* for which *P*((*y*, *tx*); *w*) = 1 is the spending transaction *stx* and not something else.

The SNARK scheme is set to prove correct execution of an augmented program that sees the transaction as a private input (which solves the first issue) and takes a STI commitment tag *τ* as public input (this is enough to solve the second issue).

### Augmented program P((y, τ); (tx, w_{P}, w_{STI})):

1. Check *Gadget_{STI}*(*τ*; *(tx, w_{STI}*)) *=* 1
2. Check *P*((*y, tx*); *w_{P}*) *=* 1
3. If both checks pass, output 1. Else output 0.

The gadget *Gadget_{STI}*(*τ*; *(tx, w_{STI}*)) allows one to check in zero-knowledge correct generation of the STI commit algorithm. It takes as public input the tag *τ* and as private input the transaction *tx* along with an extra value *w_{STI}* such that:
*Gadget_{STI}*(*τ*; (*tx, w_{STI}*)) *=* 1 if and only if *STI.commit*(*tx*) *= τ*.

The augmented program *P̂* is a wrapper of the base program *P.* Thus, given *P* its augmentation *P̂* is known too.

### 7.3 The verification script

The script [enforce constraint *P*] (also referred to as the REFTX script) to verify that indeed the spending transaction *stx* satisfies predicate ${P}_{P}^{\left(stx\right)}$ is defined as follows:
*<π_{P̂}> <y> <τ>* [enforce constraint *P*] := OP_DUP [STI verify] OP_VERIFY OP_CAT [SNARK verify *P̂*] OP_VERIFY

The REFTX script is an example of the enforcement locking script described in section 6. The STI verify script is an example of the commitment sub-script described above. The SNARK verify *P̂* is an example of the constraint sub-script described above.

Here *π_{P̂}* is a valid proof attesting to the statement *"I know a string w and a transaction tx such that P̂*(*τ*; (*tx, w*)) = 1". As defined, the script includes OP_VERIFY to mark the transaction as invalid if either the STI script fails on input tag *τ* or the SNARK verification script fails.

Recall from above that the description of the verification algorithm *SNARK.verify* (with corresponding script [SNARK verify]) of a pre-processing SNARK is independent of the program that is verified. Indeed, it is only know that *P* is being verified when inputting the corresponding verification key to the verifier. To ensure that indeed the program *P̂* is verified, the verification key *vk_{P̂}* for P is hard-coded. Thus, the REFTX script above includes: $\left[SNARK verify \hat{P}\right] : = \left〈{vk}_{\hat{P}}\right〉 \left[SNARK verify\right] .$

This is like hard-coding the public key in a P2PK script to ensure funds are sent to the right address.

If *y* is empty, then the REFTX script does not concatenate with OP_CAT (because the public input to program *P* is just the tag *τ*).

If the logic required on *y* is expensive to prove in zero-knowledge, it may be performed in-script. For example, hashing a transaction field *y* would be faster in Script (with a single opcode) than off-chain in zero-knowledge because it forces the prover to use an expensive gadget (for hashing). The prover would only need to prove in zero-knowledge that indeed *y* is part of the transaction.

The verification script [SNARK verify *P̂*] and the proof *π_{P̂}* do not depend on the size of the witness transaction (or just logarithmically). Moreover, the succinct property of the STI mechanism guarantees that *τ* and the description of its verifying script [STI verify] are also independent from the spending transaction *stx.* Combining these two observations it can be seen that the size of [enforce constraint *P*] is independent of the size of the spending transaction *stx.*

### 7.4 REFTX with dummy signatures

When the dummy signature technique described in section 5.1.2 is used as the STI mechanism, the REFTX script translates to:
*<π_{P̂}> <y> <τ>* [enforce constraint *P*]:= OP_DUP <*G*> OP_CHECKSIGVERIFY OP_CAT [SNARK verify *P̂*]OP_VERIFY

Where *G* :*=* (*x, y*) is the base point of the bitcoin curve secp256k1 (with base field ${F}_{p}$ and order *n* < *p*) and *τ* the dummy signature. Note that the overhead of the STI mechanism in the script is just 66 bytes (hard-coded base point plus two opcodes).

The gadget *Gadget_{STI}* in the augmented program *P̂* when the STI commit algorithm is set to the dummy signature is the generation of an ECDSA signature with dummy keys as is done in the Bitcoin protocol
The augmented program *P̂* is more complex than program *P* since it includes the STI gadget (that checks correct generation of the STI tag). For the case of dummy signatures this cost is dominated by checking correct *SHA*256 hash.

If script [enforce constraint *P*] outputs 1 to the top of the stack on inputs *π_{P̂},vk,y,τ* then it is guaranteed that predicate ${P}_{P}^{\left(stx\right)}$ is true (with very high probability). Recall that ${P}_{P}^{\left(stx\right)}$ is always about the spending transaction *stx.*

### 8. MINER-VALIDATED TRANSACTIONS

Embodiments of the present disclosure may be used to implement a miner-validated token protocol.

Start by defining a non-fungible token (NFT) scheme as the triplet of algorithms: $NFT : = \left(Mint, TransferOwnership, ValidateTransfer\right)$

Some previous NFT schemes have the problem that they rely on off-chain verification and a malicious user can disrupt the chain of ownership by not being compliant with the transaction format. This issue is prevented if the task of validation is moved to miners (i.e. blockchain nodes 104).

The REFTX mechanism is leveraged to allow miner validation without introducing any transaction bloat.

### 8.1 Transfer and token validation

### Algorithm ValidateTransfer

It is implemented in script and executed as part of the normal validation of a transaction. An ownership transfer of token *tk* from sender *S* to receiver *R* is validated by publishing a transaction *tx*_{*S*→*R*} to the blockchain. The first output of the transaction is locked with the following script:
[validate transfer of *tk* to *PK_{R}*]:*=* [P2PK *PK_{R}*] [enforce constraint *P_{NFT}*]

The P2PK part of the script guarantees the token is controlled by the receiver *R.* The rest of the script is the REFTX mechanism described above and ensures the transaction *tx*_{*S*→*R*} is linked to the issuance transaction *tx*₀ by enforcing correct execution of the NFT program *P_{NFT}.* Example programs are provided below.

### Algorithm TransferOwnerShip

To transfer the token *tk* the sender *S* must prove that the transaction *tx*_{*S*→*R*} is linked to the issuance transaction.

### Off-chain steps:

1) The sender generates the transaction *tx*_{*S*→*R*} correctly: It creates *tx*_{*S*→*R*} whose first output is locked with script [validate transfer of *tk* to *PK_{R}*]

The sender generates the unlocking script as follows:
2) Sign the transaction with the signing key corresponding to *PK_{S}.* This gives signature *σ_{S}*
3) Generate the STI tag *τ* for (the sighash of) *tx*_{*S*→}*_{R}.*
4) Using the evaluation key *ev_{P̂NFT}* (created when minting) generate a proof *π_{NFT}* for satisfiability of program *P_{P̂NFT}* on public inputs the STI tag *τ* above.
5) Embed the signature *σ_{S}* the explicit public input *y*, the STI tag *τ* and the proof *π_{NFT}* in the unlocking script of the first input of *tx*_{*S*→}*_{R}.*

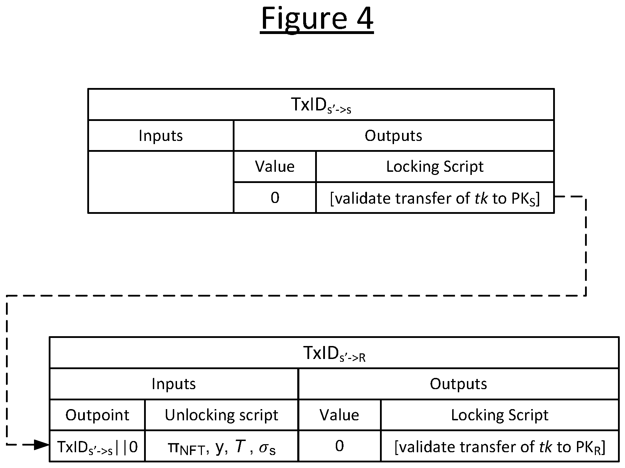

Figure 4 illustrates example transactions transferring ownership of the token *tk.*

### 8.2 Optimized script for transfer validations

By using a dummy signature as the STI mechanism, the P2PK script and the constraint enforcement subroutines of the transfer validation script can be merged into a single

subscript. The receiver public key *PK_{R}* is used in the enforce constraint script instead of a dummy public key.

The script below saves a few opcodes with respect to the one from the previous section:
[validate transfer of *tk* to *PK_{R}*]:*=* OP_DUP *<PK_{R}>* OP_CHECKSIGVERIFY OP_CAT [<*vk_{P̂_{NFT}}>* [SNARK verify] OP_VERIFY

### 8.3 Example NFT programs

This section describes two example NFT programs *P_{NFT}.*

### 8.3.1 Program 1

Consider the following (informally stated) program *P_{NFT}*:
*"Given as input a transaction tx, then either its first outpoint references the issuance transaction tx*₀ *or it references an on-chain non-coinbase transaction parent_tx for which this statement is true."*

Note the recursive nature of the statement: if the input transaction to *P_{NFT}* does not spend the issuance transaction, then its parent transaction or one of its ancestors must spend the issuance transaction. This ensures that the chain of ownership is respected.

The issuer using the issuance transaction identifier *txid*₀, generates the evaluation key *ev_{P̂_{NFT}}* and the verification key *vk_{P̂_{NFT}}* of a *recursive* SNARK for the augmented program *P_{NFT}* below.

### Augmented program P_{NFT}:

Public inputs: *τₜₓ, y* :*= hᵥₖ* := *hash*(*vk*) // *The transaction tag and hash of the verification key.*
Private inputs: *tx, w_{STI}, w_{P}* := (*vk, parent_tx, parent_txid, τ_{parent_tx}, π*)
Code:
   1. Check *Gadget_{STI}*(*τₜₓ*; *(tx, w_{STI}*)) *=* 1
   2. Check program *P_{NFT}* outputs 1 as follows: // Using *w_{P}*
      a. Check *parent_txid = SHA*256*d*(*parent_tx*)
      b. Check 1^{st} outpoint of *tx* is *parent_txid*∥0
      c. If *parent_txid ≠ txid*₀ (issuance id hard-coded) do the following:
         i. Check *STI.commit*(*parent_tx*) *= τ_{parent_tx}*
         ii. Check that
            *SNARK.verify*((*vk, τ_{parent_tx}*),*π*) = 1
         iii. Check *hᵥₖ = Hash*(*vk*)
   3. If the two steps above pass, output 1. Else output 0.

The program *P_{NFT}* described in step 2 has the id *txid*₀ of the issuance transaction (already on-chain) hard-coded in its description. The reason the verification key *vk* is passed as a witness and its hash as the public input is a technicality that we inherit from recursive SNARKs: the size of the verification key for any program is strictly larger than the size of its public inputs. Hence, the verification key of a program cannot be part of the public inputs of the program. This is typically resolved by passing its hash (of constant size) and rely on collision-resistance to ensure the right key is used to verify the proof internally. The hash *Hash* used can be a zero-knowledge friendly algorithm. The base program *P_{NFT}* checks that the STI tag *τ_{parent_tx}* for the parent transaction is correct (step 2.c.i). This is needed because the proof will be verified on input *τ_{parent_tx},* so it is needed to make sure that the script is indeed verifying the augmented *_{P̂NFT}* for the parent transaction, and not for something else. The latter is guaranteed by the binding property of the STI mechanism.

### 8.3.2 Program 2

Alternatively, the script may prove the following statement ${P}_{NFT}^{′}$ about the spending transaction:
*"Given as input a transaction tx, then either its first outpoint references the issuance transaction tx*₀ *or it references an on-chain non-coinbase transaction parent_tx whose first output is locked with the same script than the first output of tx and this script is* [P2PK *PK_{R}*] [enforce constraint *P'_{NFT}*].*"*

The definition of ${P}_{NFT}^{′}$ includes the REFTX script [enforce constraint *P'_{NFT}*] that references the statement itself. There is no circularity issue here and the statement is well-defined. The reason is that only the 'template' of the script is checked, not the variables. (Indeed, the statement *P'_{NFT}* does not say that the verification key *vk* must be one in particular). More concretely, the only point where the circularity issue could arise is in the script for the SNARK verifier *SNARK.verify.* However, for a fixed SNARK scheme the exact steps of the verification algorithm are known, and so the exact opcodes *snark_opcodes* :*=* {*SNARK.Verify* opcodes} that describe such an algorithm are known, and this is what is checked. Recall that a preproccessing SNARK verifier checks one or another program using different verification keys.)

The (augmented) program is defined as follows.

### Augmented program P'_{NFT}:

Public inputs: *τₜₓ* // The transaction tag
Private inputs: *tx, w_{STI}, w_{P}* :*=* (*parent_tx, parent_txid*)
Code:
   1. Check *Gadget_{STI}*(*τₜₓ*; (*tx, w_{STI}*)) *=* 1
   2. Check program *P'_{NFT}* outputs 1 as follows:
      a. Check *parent_txid = SHA*256*d*(*parent_tx*)
      b. Check 1^{st} outpoint of *tx* is *parent_txid*∥0
      c. If *parent_txid* ≠ *txid*₀ (issuance id hard-coded) do the following:
         i. Check that the locking scripts of the first outputs of *tx* and *parent*_*tx* are equal and correspond to [P2PK *PK_{R}*] [enforce constraint *P'_{NFT}*]( (except for hard-coded variable *PK_{R}*)*.* Note that this includes checking that the hard-coded verification keys in both scripts are equal.
   3. If the two steps above pass, output 1. Else output 0.

Difference with the first program: better efficiency on prover's side. The task of validating the previous transfer from the users is delegated to the miners. The resulting program *_{P̂}'_{NFT}* is more efficient to prove than the previous program *P_{NFT}* mainly because the SNARK verification gadget (which is costly to emulate in zero-knowledge) is replaced with byte comparisons. Also, since recursion is no longer needed, the verification key is not an input to the program, and the parameters of the SNARK scheme are more lightweight than those used when recursion is needed (for the same security level). Lighter parameters are the main source of efficiency.

### 8.4 Minting

The minting mechanism described in this section converts the scheme from Section 8.1 into a truly atomic swap (a trade between two parties without third parties involved). The issuer still is needed for token's authenticity, but we can dispense of his presence when trading the token between two users.

### Step 1 - Issuance transaction

The original owner (issuer) creates the issuance transaction *tx*₀ with the (non-fungible) token *tk* embedded as OP_RETURN data. He then uploads *tx*₀ to the blockchain as a regular P2PK transaction that 'sends' the token to a public key *PK_{Issuer}* under his control.

### Step 2 - Keys generation for the NFT program

The issuer using the issuance transaction identifier *txid*₀, generates the evaluation key *ek* and the verification key *vk* of a SNARK for one of the augmented programs *P_{NFT}* outlined in Section 8.3.

### Step 3 - Generation of the mint transaction tx_{→Issuer}

The issuer generates the verification script [enforce constraint *P_{NFT}*]using scripts [STI verify] and [SNARK verify *P̂_{NFT}*]. Then it publishes:
- The evaluation key *ek* and verification key *vk* corresponding to program *P̂_{NFT}.*
- The verification script.

This is done by means of transacting the token for the first time in transaction *tx*_{→*Issuer*} (that we call the *mint* transaction). The token is sent to a public key *PK_{I}* that the issuer controls. After this transaction is confirmed in the blockchain, the minting process is concluded, and the token is ready to be traded. In this example, the issuer funds the issuance and mint transactions.

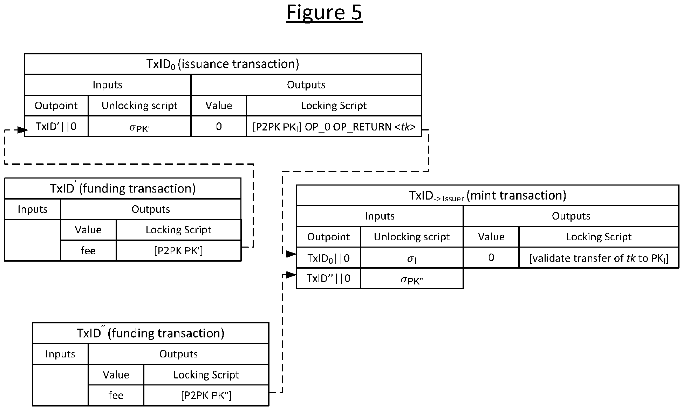

Figure 5 illustrates example transactions for minting a token.

If using program *P_{NFT},* when transferring the token from the issuer to the first receiver, the issuer will need the proof attesting to *"the mint transaction tx*_{→}*_{Issuer} is the parent of the issuance tx*₀*".* He can generate that proof himself and feed it into the prover for program *_{P̂NFT}.*

How can the receiver *R* be convinced he owns the token *tk*? One possibility is that *R* traces the transaction *tx*_{*S*→*R*} all the way back to the issuance transaction *tx*₀ or to the minted transaction *tx*_{→}*_{Issuer}.* Another possibility is a trusted party certifies the origin, but this does not give an atomic trade. This section describes an alternative mechanism to avoid resorting to either of these.

Implicitly *tk* appears in each transaction *ts*_{*S*→*R*} as it is hard-coded in [enforce constraint *P_{NFT}* ] via the verification key *vk* of the augmented program *P̂_{NFT}.* Here, *P̂_{NFT}* denotes either of the programs described in section 8.3.

The transaction *tx*_{*S*→*R*} must be chained to *tx*₀ provided (i) proof *π_{NFT}* validates (ensured by miners given that *tx*_{*S*→*R*} appears on-chain) and (ii) the verification key *vk* is the right one; that is, the key *vk* that was generated by the issuer during the minting process.

The receiver *R,* upon confirmation of *tx*_{*S*→*R*} in the blockchain, does the following two checks.
1) He checks well-formedness of script [validate transfer *tk* to *PK_{R}*] embedded in *tx*_{*S*→}*_{R}.* He can do so because the opcodes that form [P2PK *PK_{R}*] and [enforce constraint *P*] are well-known.
2) He checks his public key *PK_{R}* and the right verification key *vk* are embedded in the script. The right verification key is the one that appears in the mint transaction *tx*_{→}*_{Issuer}.* The user can identify the mint transaction using the public *PK_{I}* of the issuer.

If the checks pass, he can proceed to pay for the token to the sender.

This implementation of the minting process allows the receiver *R* to only have to obtain two transactions from the blockchain: the last one *τx*_{*S*→*R*} and the first one *tx*_{→*Issuer*} (the mint transaction) instead of the entire chain.

Token authenticity is given by the public key *PK_{I}* of the issuer embedded in the mint transaction.

### 8.5 Fully fair trades

This section describes how to replace the algorithm ***TransferOwnerShip*** by an interactive process ***SwapOwnershipByBitcoins*** that is fair for both parties. In this process both parties agree on the amount the token is worth in terms of the native blockchain token (e.g. Bitcoin). Then, a transaction *tx_{S⇔R}* with two outputs is created.
- First output: The locking script [validate transfer *tk* to *PK_{R}*] of the output *tx*_{*S*→*R*} from the previous section.
- Second output: A P2PK output with the agreed amount of digital asset locked by the sender public key *PK_{S}.*

The steps of ***SwapOwnershipByBitcoins*** are:
1. The sender S creates the transaction *tx_{S⇔R}* (without inputs yet) and sends it to the receiver *R* via an off-chain channel. (The channel does not need to be confidential nor authenticated.)
2. The receiver *R* performs the checks explained in section 8.5. If he is happy, he adds inputs to fund the transaction and signs the transaction with his corresponding bitcoin signing keys. To sign he uses flag SIGHASH_ALL|ANYONECANPAY to include all outputs (in particular the first one that transfers the token to him) in the message signature. He then sends the funded and signed transaction to the sender.
3. The sender checks the outpoints included by the receiver are valid and have enough funds. If so, he generates the unlocking script (σ*_{S}, τ, π_{NFT}*) of the first outpoint to transfer the token *tk* to the receiver. (As explained in steps (2)-(5) of algorithm ***TransferOwnerShip*** described in section 8.1.)

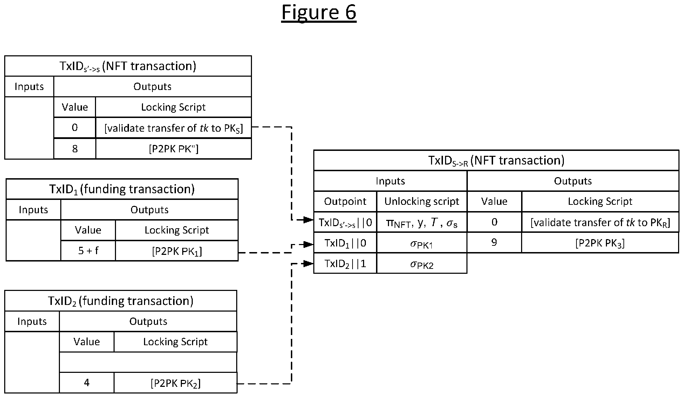

Figure 6 illustrates example transactions for implementing a fair trade. The token is traded at 9 units of the native blockchain digital asset. There may be many funding transactions which may fund from different public keys/addresses.

### 8.6 Royalties

The issuer may impose that a royalty is paid to him at each trade of the token. This may be a fixed amount or a percentage of the amount the NFT is traded for. A program *P_{NFTroyalty}* checks the trade transaction *tx_{S⇔R}* it has at least two outputs. The second output (new), transfers units of the underlying digital asset to a public key *PK_{Issuer}* controlled by the issuer that it is hard-coded in the program itself.

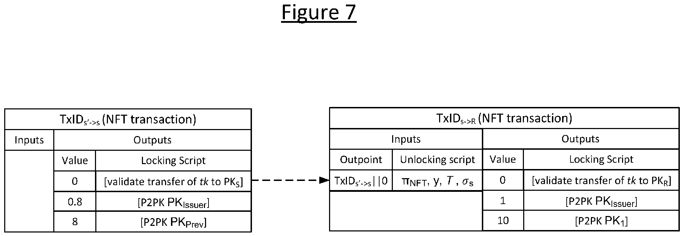

The NFT transaction may be a fully fair swap *tx_{S⇔R}* (see section 8.5) or a one-sided swap *tx*_{*S*→}*_{R}.* Figure 7 exemplifies royalties when the NFT transaction is *tx_{S⇔R}.*

Below, *P_{NFT}* may be any program for an NFT. For example, we can take the programs described in section 8.3. The issuer generates evaluation/verification keys for the augmented program *P̂_{NFTRoyalty}* in the minting process.

### Program P_{NFTroyalty}:

Public inputs: At least the NFT transaction *stx* (i.e., either *tx*_{*S*→*R*} or *tx_{S⇔R}*).
Private inputs: *w_{P}*.
Code:
   1. Check the *tx_{S⇔R}* has three outputs
   2. Check program *P_{NFT}* outputs 1 // Using *w_{P}*
   3. If *parent_txid* ≠ *txid*₀ check the following
      a. Check the value of the first output is a fixed fraction of the value of the second output. (Alternatively, check it is at least a constant value.)
      b. Check the third output is locked with a P2PK with *PK_{Issuer}* in it.
   4. If the checks above pass, output 1. Else output 0

### 8.7 Limited editions

This section describes an NFT to trade replicas of the same token. The number *N* of replicas of a given token *tk* is finite and its concrete value (the token's scarcity) is configured by the issuer.

Replicas may be exact copies, for example, an artist can mint *N* copies of the same digital piece of art and sell them individually. Alternatively, replicas may be bundled together but each be slightly different like tickets of a concert with numbered seats. The value of the replicas will then depend on its type. In the example of tickets of a concert, seats closer to the stage are likely to be more valuable.

Replicas of a token *tk* are defined as triplets
*tk*^{(*i*)} :*=* (*tk, i, replica_specific_field*)*.*

The first field indicates the token they are replicating. The second field is a serial number (a counter). The third field can be used to fill any replica-specific information needed (it can be empty).

In some examples the issuer may simply mint in parallel *N* replicas of the token (as per Section 0). However, this means that each replica would have a different verification key, making trades cumbersome (the users would need to be aware of many keys and somehow should know which key use to trade the i-th replica). This section shows how to use a single verification key to control all replicas.

### Step 1 - Issuance transactions

The issuer creates *N* different issuance transactions ${tx}_{0}^{\left(1\right)} , … , {tx}_{0}^{\left(N\right)}$*.* The i-th issuance transaction ${tx}_{0}^{\left(i\right)}$ contains the i-th replica *tk*^{(*i*)} embedded as OP_RETURN data.

### Step 2 - Keys generation for the NFT program

He then collects the identifiers ( ${txid}_{0}^{\left(1\right)} , … , {txid}_{0}^{\left(N\right)}$) in a Merkle tree 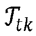 and let *rtₜₖ* be the root of this tree. For simplicity, assume *N* = 2*ⁿ* for some *n.* (If *N* is not a power of 2, the issuer populates the last leaves of the tree with dummy data to obtain *N'* = 2*ⁿ* > *N* leaves. Here *n is* such that *n* - 1 < *log*₂(*N*) *< n*.)

The program *P_{NFTwithReplicas}* governs trades of token replicas. It checks whether or not the first outpoint of the NFT transaction *tx* (either *tx := tx*_{*S*→*R*} or *tx* :*= tx_{S⇔R}*) references a transaction *tx_parent* whose ID belongs to the token tree 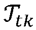 . It also enforces that the same serial number *i* of the replica is embedded in the unlocking scripts of *tx* and *tx_parent* These are the two only differences with respect to the programs *P_{NFT},* ${P}_{NFT}^{′}$ from section 8.3.

The algorithm ***CheckTreeMembership***(*txid, i,* 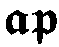 ***,** rtₜₖ*) → {0,1} checks for Merkle tree membership. The circuit to check if an element *txid* belongs to tree 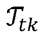 is well-known. It takes four inputs: the purported leaf *txid,* the leaf index *i* (the serial number of the replica), the Merkle proof 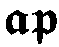 (the authentication path), and the root of the tree *rtₜₖ.* Then it recomputes the root as ${rt}_{tk}^{′}$ using that information and outputs 1 if and only if *rtₜₖ* = *rt'ₜₖ.*

The authentication path 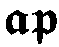 is formed by the sibling leaf (indexing leaves from 0 to *N* - 1, the sibling leaf is the (*i* - 1)-th leaf if *i* is odd, otherwise the (*i* + 1)-th leaf), and all intermediate hashes *Hⱼ* 1 ≤ *j* < *n* needed to traverse the tree from bottom to top. The algorithm recomputes the root ${rt}_{tk}^{′}$ iteratively hashing using the sibling leaf and the intermediate hashes. To decide the position of the inputs to the hash at the *j*-th iteration, one uses the *j*-th bit of the index *i.*

### Augmented program P̂'_{NFTwithReplicas}:

Public inputs: *τₜₓ*
Private inputs: *tx, w_{STI}, w_{P}* := (*parent_tx, parent_txid,* 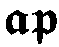 , *iₜₓ, i_{parent_tx}*)
Code:
   1. Check *Gadget_{STI}*(*τₜₓ*; *(tx, w_{STI}*)) *=* 1
   2. Check program *P'_{NFTwithReplicas}* outputs 1 as follows:
      a. Check *parent_txid = SHA*256*d*(*parent_tx*)
      b. Check 1^{st} outpoint of *tx* is *parent_txid*∥0
      c. Check that *iₜₓ = i_{parent_tx}* and that *iₜₓ, i_{parent_tx}* are embedded in the unlocking scripts of *tx, tx_parent* respectively.
      d. If ***CheckTreeMembership***(*parent_txid, iₜₓ,* ap*, rtₜₖ*) = 0 (parent is not a replica - root *rtₜₖ* hard-coded) do the following:
         i. Check that the locking scripts of the first outputs of *tx* and *parent_tx* are equal and correspond to [P2PK *PK_{R}*] [enforce constraint *P'_{NFT}*] (except for hard-coded variable *PK_{R}).* Note that this includes checking that the hard-coded verification keys in both scripts are equal.
   3. If the two steps above pass, output 1. Else output 0.

Any suitable hash function may be used to generate the token tree 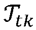 .

### Step 3 - Generation of the mint transactions

The issuer then generates the verification script [enforce constraint *P_{NFTwithReplicas}*]and it creates *N* mint transactions ${\left\{{tx}_{\to Issuer}^{\left(i\right)}\right\}}_{1 \leq i \leq N}$, each spending one of the issuance transactions. After all transactions are confirmed in the blockchain, the *N* replicas of the token can be traded individually. To trade the *i*-th replica, a regular user starts from ${tx}_{\to Issuer}^{\left(i\right)}$*.*

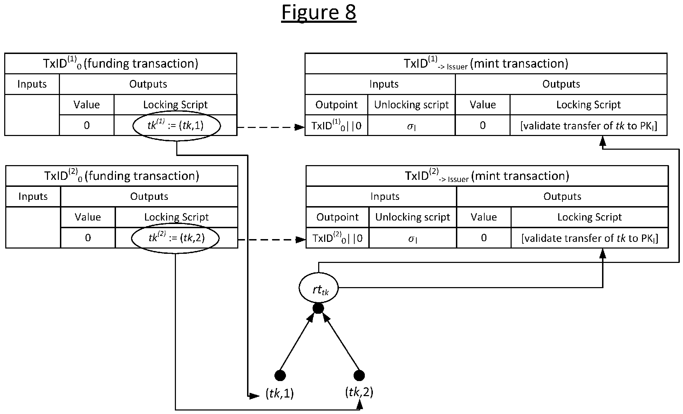

Figure 8 illustrates example transactions for minting two replicas. The root of the token tree is hard-coded in the NFT program that validates transfers.

### 8.7.1 Re-editions

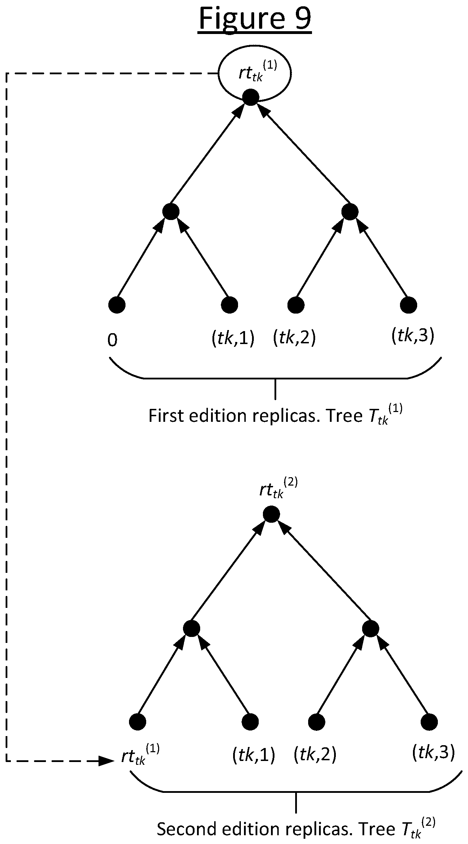

Replicas minted together are said to belong to a specific edition. The issuer can also mint new editions as time evolves. To give order between editions, the token tree of the *j*-th edition contains as first leaf the root of the *j* - 1 token tree (empty leaf in the first edition). Figure 9 illustrates this process.

Fake re-editions are detected because the honest-generated mint transactions are always locked with the public key *PK_{I}* of the issuer for all editions. Only the issuer can initiate the trades at each re-edition.

### 8.8 Auction-friendly NFTs

This section describes design an NFT where after minting buyers place bids. Once the auction is closed the issuer transfers the token to the buyer who placed the higher bid. From that point on, transfers between regular users are just atomic swaps as already explained. The interaction between buyers and the issuer happens offline in similar way to fully atomic swaps.

### 8.8.1 Placing bids

The buyer *R* generates the NFT transaction *tx_{Issuer⇔R}* funded with his bid. He sends it to the issuer. To generate this transaction the buyer uses the ID *txid*₀ of the issuance transaction *tx*₀ which is already on-chain.

### 8.8.2 Selecting winners

The issuer goes through all the list of received bids and chooses the winner (typically, the one with the higher bid.) If he is happy with the transaction (namely, the funding transaction(s) behind *tx*_{*Issuere*⇔*Winner*} have enough funds), he transfers the token to *Winner*.

Once *tx*_{*Issuere*⇔*Winner*} appears on chain the other transactions *tx*_{*Issuere*⇔*R*} become invalid for *R* ≠ *Winner*, so everyone whose bid was not selected still maintains his funds unspent.

### 8.8.3 Miner-validated threshold prices

The issuer may set a price below of which bids cannot be placed. For example, it can be set to at least what it takes to fund the issuance transaction *tx*₀*.* Depending on the token, this will vary.

The issuer may delegate checking the funding transactions behind the bids are correct to the miners by including such check in the NFT program that is enforced with the SNARK. Thus, this program also checks whether the second output of the NFT transaction *tx*_{*S*⇔*R*} has a value higher than some threshold price given as input in case the first outpoint references the issuance transaction.

### Program P_{NFTauction}:

Public inputs: At least the NFT transaction *tx*_{*S*⇔*R*} and the start biding price *threshold_price.*
Private inputs: *w_{P}*.
   Code:
   1. Check program *P_{NFT}* outputs 1 // Using *w_{P}*.
   2. If *parent*_*txid = txid*₀ (issuance id hard-coded) check value of 2^{nd} output is equal or larger than *threshold_price.*
   3. If the two steps above pass, output 1. Else output 0

As in the previous section, *P_{NFT}* is any program for an NFT. Since the threshold price is passed as public input it will be part of the unlocking script and therefore it can be enforced to be larger than certain per use-case fixed value with opcode OP_GREATERTHANOREQUAL and hard-coding the value in the locking script.

Another option is to hard-code the threshold price in the program *P_{auction}* itself.

### 8.9 Unburnable tokens

The NFT described in Section 8.1 allows to transfer the token to a meaningless output. For example, the current owner *S* can set the first output of *tx*_{*S*→*R*} locked with OP_0 OP_RETURN which disrupts the chain that is proved with program *P_{NFT}*. This means tokens traded with such a scheme can be burnt, which might not be desirable in certain scenarios. To prevent explicitly burning tokens we use the second instantiation of the NFT program ${P}_{NFT}^{′}$ described in Section 8.3. Since *P'_{NFT}* also checks that also the first output of the spending transaction is locked with the same script and the verification key are the same then the strategy discussed in the previous paragraph is not possible in this scheme. However, the token can be burnt only by sending the token to a public key for which it is widely believed no one has the signing key.

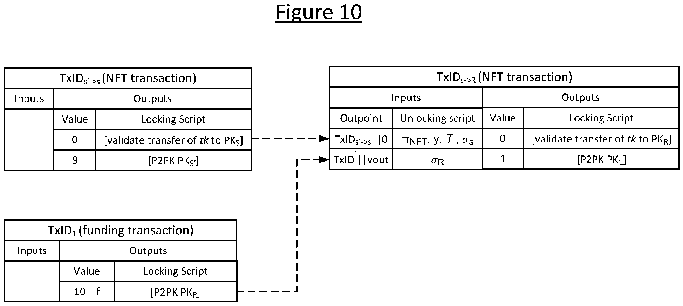

We explain informally the design of our program *P_{unburntNFT}*. The program, besides checking ${P}_{NFT}^{′}$ outputs 1 (see Section 8.3), it makes sure the receiver does know the signing key. It checks the transaction is of the form *tx*_{*S*⇔*R*} and it has exactly two outputs. The program also enforces that the first output of the funding transaction is locked with a P2PK with public key matching the public key *PK_{R}* where the token is sent to. The ability of unlocking such UTXO guarantees the receiver knows the signing key. Hence, the token is not being burnt in the trade. Figure 10 illustrates example transactions for generating an unburnable token.

### 9. FURTHER REMARKS

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

Some embodiments have been described in terms of the blockchain network implementing a proof-of-work consensus mechanism to secure the underlying blockchain. However proof-of-work is just one type of consensus mechanism and in general embodiments may use any type of suitable consensus mechanism such as, for example, proof-of-stake, delegated proof-of-stake, proof-of-capacity, or proof-of-elapsed time. As a particular example, proof-of-stake uses a randomized process to determine which blockchain node 104 is given the opportunity to produce the next block 151. The chosen node is often referred to as a validator. Blockchain nodes can lock up their tokens for a certain time in order to have the chance of becoming a validator. Generally, the node who locks the biggest stake for the longest period of time has the best chance of becoming the next validator.

It will be appreciated that the above embodiments have been described by way of example only. More generally there may be provided a method, apparatus or program in accordance with any one or more of the following Statements.

Statement 1. A computer-implemented method for enforcing constraints on a blockchain transaction, wherein the method is performed by a first party and comprises:
generating an enforcement locking script for inclusion in a first output of a first blockchain transaction, wherein the enforcement locking script comprises a commitment sub-script , and a constraint sub-script comprising a verification key, and wherein when executed together with an unlocking script of a second blockchain transaction, the unlocking script comprising a transaction commitment and a constraint proof, the enforcement locking script is configured such that:
the commitment sub-script is configured to verify that the transaction commitment corresponds to the second blockchain transaction; and
the constraint sub-script is configured to use the verification key to verify that the constraint proof provides proof that a committed blockchain transaction satisfies one or more constraints.

Statement 2. The method of statement 1, wherein the constraint sub-script and/or the unlocking script comprises a public input, and wherein the constraint sub-script is configured to use both the verification key and the public input to verify that the constraint proof provides proof that the committed blockchain transaction satisfies the one or more constraints.

Statement 3. The method of statement 1 or statement 2, wherein the commitment sub-script comprises a commitment key, and wherein the commitment sub-script is configured to use the commitment key to verify that the transaction commitment corresponds to the second blockchain transaction.

Statement 4. The method of any preceding statement, wherein the commitment sub-script is configured to supply the transaction commitment proof to the constraint sub-script, and wherein the constraint sub-script is configured to use the verification key, the public input and the transaction commitment to verify that the constraint proof provides proof that the second blockchain transaction satisfies the one or more constraints.

Statement 5. The method of any preceding statement, wherein the constraint sub-script is configured to use the verification key to verify that the constraint proof has been generated using an evaluation key corresponding to the verification key.

Statement 6. The method of any preceding statement, wherein the commitment sub-script comprises a non-interactive zero-knowledge verification algorithm configured to verify that the constraint proof has been generated for satisfying a particular program.

Statement 7. The method of any preceding statement, wherein the transaction commitment comprises a digital signature, wherein the commitment key comprises a public key, and wherein the commitment sub-script is configured to verify that the digital signature signs a message based on the second transaction.

Statement 8. The method of statement 7, wherein the public key corresponds to a private key set equal to one.

The private key may be an ECDSA private key.

Statement 9. The method of any preceding statement, comprising:
including the enforcement locking script in the first output of the first blockchain transaction; and
causing the first blockchain transaction to be submitted to a second party and/or one or more nodes of a blockchain network.

Statement 10. The method of statement 5 or any statement dependent thereon, comprising making the evaluation key available to a second party.

Statement 11. The method of any preceding statement, wherein the one or more constraints impose restrictions on one or more of a form, content, and number of one or more inputs and/or one or more outputs of the second blockchain transaction.

Statement 12. The method of any preceding statement, wherein at least one of the one or more constraints is that the committed blockchain transaction comprises an input that references a target transaction or that the committed blockchain references a transaction that forms part of a chain of one or more transactions linking to the target transaction.

The target transaction may be a token issuance or token minting transaction.

Statement 13. The method of any preceding statement, wherein at least one of the one or more constraints is that the committed blockchain transaction comprises some or all of the enforcement locking script.

Statement 14. The method of any preceding statement, wherein at least one of the one or more constraints is that a transaction referenced by an input of the committed blockchain transaction comprises a valid constraint proof linking the transaction to a target transaction, or that the transaction is the target transaction.

Statement 15. The method of any preceding statement, wherein the enforcement locking script comprises a transfer sub-script, wherein the transfer sub-script comprises a target public key or a hash thereof, and wherein the transfer sub-script is configured to verify that the unlocking script comprises a signature corresponding to the target public key.

Statement 16. The method of any preceding statement, wherein the blockchain comprises a token issuance transaction, wherein the token issuance transaction comprises token metadata, wherein the first blockchain transaction is a token mint transaction, and wherein an input of the token mint transaction references an output of the token issuance transaction.

Statement 17. The method of statement 16, wherein the output of the token issuance transaction is locked to a public key associated with a token issuer.

Statement 18. The method of any of statements 1 to 15, wherein the blockchain comprises a token issuance transaction, wherein the token issuance transaction comprises token metadata, wherein the blockchain comprises a token mint transaction, wherein an input of the token mint transaction references an output of the token issuance transaction, and wherein an input of the first blockchain transaction references an output of the token mint transaction or an output of a transaction that forms part of a chain of one or more transactions linking to the token mint transaction.

Statement 19. The method of statement 15 or any statement dependent thereon, wherein the target public key is associated with the second party, and wherein the first blockchain transaction comprises a second output locked to a public key associated with the first party.

Statement 20. The method of statement 18 and statement 19 when dependent on statement 9, comprising:
including, in the input of the first blockchain transaction, a constraint proof and a transaction commitment for unlocking the output of the token mint transaction or the output of a transaction that forms part of a chain of one or more transactions linking to the token mint transaction;
sending the first blockchain transaction to the second party, wherein the second party is configured to include one or more respective inputs in the first blockchain transaction;
receiving the first blockchain transaction from the second party; and
verifying that the first blockchain transaction includes one or more respective inputs that reference one or more respective transaction outputs locked to respective public keys of the second party;
including, in the input of the first blockchain transaction, a signature for unlocking the output of the token mint transaction or the output of a transaction that forms part of a chain of one or more transactions linking to the token mint transaction
.

Statement 21. The method of any preceding statement, wherein at least one of the one or more constraints is that the second blockchain transaction comprises an output locked to a public key associated with the first party.

Statement 22. The method of any preceding statement, wherein at least one of the one or more constraints is that the second blockchain transaction comprises an output locked to a public key associated with a predetermined party, and wherein at least one of the one or more constraints is that the output locks a predetermined amount of digital asset or a percentage of an amount of the digital asset locked by a different output of the second blockchain transaction.

Statement 23. The method of any preceding statement, wherein the blockchain comprises a plurality of respective issuance transactions, each comprising respective token data, wherein the constraint sub-script comprises a Merkle root of a Merkle tree generated based on respective transaction identifiers of the respective issuance transactions, and wherein at least one of the constraints is that the second blockchain transaction comprises an input that references one of said respective issuance transactions or that the second blockchain references a transaction that forms part of a chain of one or more transactions linking to one of said respective issuance transactions.

Statement 24. The method of any of statements 1 to 22, wherein the blockchain comprises a plurality of respective first issuance transactions, wherein a first Merkle root of a first Merkle tree is generated based on respective transaction identifiers of the respective first issuance transactions, wherein the blockchain comprises a plurality of respective second issuance transactions, each comprising respective token data, wherein the constraint sub-script comprises a second Merkle root of a second Merkle tree generated based on respective transaction identifiers of the respective second issuance transactions and the first Merkle root, and wherein at least one of the constraints is that the second blockchain transaction comprises an input that references one of said respective second issuance transactions or that the second blockchain references a transaction that forms part of a chain of one or more transactions linking to one of said respective second issuance transactions.

Statement 25. The method of statement 15 or any statement dependent thereon, wherein the blockchain comprises a transaction comprising a third output locked to a public key associated with the second party, wherein the second blockchain transaction comprises an input that references the third output, and wherein at least one of the one or more constraints is that the target public key is associated with the public key associated with the second party.

Statement 26. The method of statement 19 or any statement dependent thereon, wherein at least one of the one or more constraints is that the second output locks an amount of digital asset equal to or larger than a threshold amount.

Statement 27. A computer-implemented method of generating a blockchain transaction that satisfies constraints, wherein a first blockchain transaction comprises an output comprising an enforcement locking script, wherein the enforcement locking script comprises a transaction commitment sub-script, and a constraint enforcement sub-script comprising a verification key, and wherein the commitment sub-script is configured to verify that a candidate transaction commitment corresponds to a candidate blockchain transaction, and the constraint sub-script is configured to use the verification key to verify that a candidate constraint proof provides proof that the candidate blockchain transaction satisfies one or more constraints, wherein the method is performed by a second party and comprises:
generating at least part of a second blockchain transaction, the second blockchain comprising an input referencing the output of the first blockchain transaction, and wherein the second blockchain transaction satisfies the one or more constraints;
generating a transaction commitment based on said at least part of the second blockchain transaction;
generating a constraint proof based on the second blockchain transaction, wherein the constraint proof provides proof that the second blockchain transaction satisfies the one or more constraints; and
including the transaction commitment and the constraint proof in an unlocking script of the input of the second blockchain transaction.

Statement 28. The method of statement 27, wherein the constraint proof is generated using an evaluation key corresponding to the verification key.

Statement 29. The method of statement 27 or statement 28, wherein the constraint sub-script comprises a non-interactive zero-knowledge verification algorithm configured to verify that the candidate constraint proof has been generated using a corresponding non-interactive zero-knowledge proving algorithm, and wherein the method comprises generating the constraint proof using the non-interactive zero-knowledge proving algorithm.

Statement 30. The method of any of statements 27 to 29, wherein the commitment sub-script comprises a public key, and wherein said generating of the transaction commitment comprises generating a digital signature based on the second blockchain transaction using a private key corresponding to the public key.

Statement 31. The method of statement 30, wherein the private key is set equal to one, and an ephemeral key used to generate the digital signature is set equal to one.

Statement 32. The method of any of statements 27 to 31, comprising causing the second blockchain transaction to be submitted to the first party and/or one or more nodes of a blockchain network.

Statement 33. The method of any of statements 27 to 32, wherein the enforcement locking script comprises a transfer sub-script, wherein the transfer sub-script comprises a target public key or a hash thereof, wherein the transfer sub-script is configured to verify that the unlocking script comprises a signature corresponding to the target public key, and wherein the method comprises:
generating a signature using a private key corresponding to the target public key; and
including the signature in the unlocking script of the second blockchain transaction.

Statement 34. The method of any of statements 27 to 33, wherein said including of the transaction commitment and the constraint proof in the unlocking script of the input of the second blockchain transaction is conditional on:
verifying the enforcement locking script conforms to one or more predetermined conditions; and
verifying that the verification key corresponds to a predetermined evaluation key.

Statement 35. The method of statement 33 and statement 34, wherein said including of the transaction commitment and the constraint proof in the unlocking script of the input of the second blockchain transaction is conditional on:
verifying that the target public key is a public key owned by the second party.

Statement 36. Computer equipment comprising:
memory comprising one or more memory units; and
processing apparatus comprising one or more processing units, wherein the memory stores code arranged to run on the processing apparatus, the code being configured so as when on the processing apparatus to perform the method of any of statements 1 to 35.

Statement 37. A computer program embodied on computer-readable storage and configured so as, when run on one or more processors, to perform the method of any of statements 1 to 35.

Statement 38. A computer-implemented method for enforcing constraints on a blockchain transaction, wherein the method is performed by a blockchain node of a blockchain network and comprises:
obtaining a first blockchain transaction, wherein the first blockchain transaction comprises an enforcement locking script, wherein the enforcement locking script comprises a commitment sub-script and a constraint sub-script, wherein the constraint sub-script comprises a verification key;
obtaining a second blockchain transaction, wherein the second blockchain transaction comprises an unlocking script, wherein the unlocking script comprises a transaction commitment and a constraint proof; and
validating the second blockchain transaction, wherein the validating comprises executing the unlocking script together with the enforcement locking script, and wherein the executing comprises:
   verifying, by the commitment sub-script, that the transaction commitment corresponds to the second blockchain transaction; and
   verifying using the verification key, by the constraint sub-script, that the constraint proof provides proof that a committed blockchain transaction satisfies one or more constraints.

Statement 39. A computer-implemented method for enforcing constraints on a blockchain transaction, wherein the method is performed by a first party and comprises:
receiving an enforcement locking script, wherein the enforcement locking script comprises a commitment sub-script, and a constraint sub-script comprising a verification key;
including the enforcement locking script in an output of a first blockchain transaction, wherein when executed together with an unlocking script of a second blockchain transaction, the unlocking script comprising a transaction commitment and a constraint proof, the enforcement locking script is configured such that:
   the commitment sub-script is configured to verify that the transaction commitment corresponds to the second blockchain transaction; and
   the constraint sub-script is configured to use the verification key to verify that the constraint proof provides proof that a committed blockchain transaction satisfies one or more constraints; and
causing the first blockchain transaction to be submitted to a second party and/or one or more nodes of a blockchain network.

Statement 40. The method of statement 38 or statement 39, wherein the constraint sub-script and/or the unlocking script comprises a public input, and wherein the constraint sub-script is configured to use both the verification key and the public input to verify that the constraint proof provides proof that the committed blockchain transaction satisfies the one or more constraints.

Statement 41. The method of any of statements 38-40, wherein the commitment sub-script comprises a commitment key, and wherein the commitment sub-script is configured to use the commitment key to verify that the transaction commitment corresponds to the second blockchain transaction.

Statement 42. The method of any of statements 38-41, wherein the commitment sub-script is configured to supply the transaction commitment proof to the constraint sub-script, and wherein the constraint sub-script is configured to use the verification key, the public input and the transaction commitment to verify that the constraint proof provides proof that the second blockchain transaction satisfies the one or more constraints.

Statement 43. The method of any of statements 38-42, wherein the constraint sub-script is configured to use the verification key to verify that the constraint proof has been generated using an evaluation key corresponding to the verification key.

Statement 44. The method of any of statements 38-43, wherein the commitment sub-script comprises a non-interactive zero-knowledge verification algorithm configured to verify that the constraint proof has been generated for satisfying a particular program.

Statement 45. The method of any of statements 38-44, wherein the transaction commitment comprises a digital signature, wherein the commitment key comprises a public key, and wherein the commitment sub-script is configured to verify that the digital signature signs a message based on the second transaction.

Statement 46. The method of statement 45, wherein the public key corresponds to a private key set equal to one.

Statement 47. The method of any of statements 38-46, wherein at least one of the one or more constraints is that the committed blockchain transaction comprises an input that references a target transaction or that the committed blockchain transaction references a transaction that forms part of a chain of one or more transactions linking to the target transaction.

Statement 48. The method of any of statements 38-47, wherein at least one of the one or more constraints is that the committed blockchain transaction comprises some or all of the enforcement locking script.

Statement 49. Computer equipment comprising:
memory comprising one or more memory units; and
processing apparatus comprising one or more processing units, wherein the memory stores code arranged to run on the processing apparatus, the code being configured so as when run on the processing apparatus to perform the method according to any of statements 38-48.

Statement 50. A computer program embodied on computer-readable storage and configured so as, when executed and run on one or more processors of a computer, to perform the method according to any of statements 38-48.

According to another aspect disclosed herein, there may be provided a method comprising the actions of the first party and the second party.

According to another aspect disclosed herein, there may be provided a system comprising the computer equipment of the first party and the second party.

## Claims

1. A computer-implemented method for enforcing constraints on a blockchain transaction (152), wherein the method is performed by a blockchain node (104) of a blockchain network (106) and comprises:
obtaining a first blockchain transaction (152), wherein the first blockchain transaction comprises an enforcement locking script, wherein the enforcement locking script comprises a commitment sub-script and a constraint sub-script, wherein the constraint sub-script comprises a verification key;
obtaining a second blockchain transaction (152), wherein the second blockchain transaction comprises an unlocking script, wherein the unlocking script comprises a transaction commitment and a constraint proof; and
validating the second blockchain transaction (152), wherein the validating comprises executing the unlocking script together with the enforcement locking script, and wherein the executing comprises:
verifying, by the commitment sub-script, that the transaction commitment corresponds to the second blockchain transaction (152); and
verifying using the verification key, by the constraint sub-script, that the constraint proof provides proof that a committed blockchain transaction (152) satisfies one or more constraints.

2. A computer-implemented method for enforcing constraints on a blockchain transaction (152), wherein the method is performed by a first party (103a) and comprises:
receiving an enforcement locking script, wherein the enforcement locking script comprises a commitment sub-script, and a constraint sub-script comprising a verification key;
including the enforcement locking script in an output of a first blockchain transaction (152), wherein when executed together with an unlocking script of a second blockchain transaction (152), the unlocking script comprising a transaction commitment and a constraint proof, the enforcement locking script is configured such that:
the commitment sub-script is configured to verify that the transaction commitment corresponds to the second blockchain transaction (152); and
the constraint sub-script is configured to use the verification key to verify that the constraint proof provides proof that a committed blockchain transaction (152) satisfies one or more constraints; and
causing the first blockchain transaction (152) to be submitted to a second party (103b) and/or one or more nodes (104) of a blockchain network (106).

3. The method of claim 1 or claim 2, wherein the constraint sub-script and/or the unlocking script comprises a public input, and wherein the constraint sub-script is configured to use both the verification key and the public input to verify that the constraint proof provides proof that the committed blockchain transaction (152) satisfies the one or more constraints.

4. The method of any preceding claim, wherein the commitment sub-script comprises a commitment key, and wherein the commitment sub-script is configured to use the commitment key to verify that the transaction commitment corresponds to the second blockchain transaction (152).

5. The method of any preceding claim, wherein the commitment sub-script is configured to supply the transaction commitment proof to the constraint sub-script, and wherein the constraint sub-script is configured to use the verification key, the public input and the transaction commitment to verify that the constraint proof provides proof that the second blockchain transaction (152) satisfies the one or more constraints.

6. The method of any preceding claim, wherein the constraint sub-script is configured to use the verification key to verify that the constraint proof has been generated using an evaluation key corresponding to the verification key.

7. The method of any preceding claim, wherein the commitment sub-script comprises a non-interactive zero-knowledge verification algorithm configured to verify that the constraint proof has been generated for satisfying a particular program.

8. The method of any preceding claim, wherein the transaction commitment comprises a digital signature, wherein the commitment key comprises a public key, and wherein the commitment sub-script is configured to verify that the digital signature signs a message based on the second transaction.

9. The method of claim 8, wherein the public key corresponds to a private key set equal to one.

10. The method of any preceding claim, wherein at least one of the one or more constraints is that the committed blockchain transaction (152) comprises an input that references a target transaction or that the committed blockchain transaction references a transaction that forms part of a chain of one or more transactions linking to the target transaction.

11. The method of any preceding claim, wherein at least one of the one or more constraints is that the committed blockchain transaction (152) comprises some or all of the enforcement locking script.

12. Computer equipment (102a, 102b) comprising:
memory comprising one or more memory units; and
processing apparatus comprising one or more processing units, wherein the memory stores code arranged to run on the processing apparatus, the code being configured so as when run on the processing apparatus to perform the method according to any preceding claim.

13. A computer program embodied on computer-readable storage and configured so as, when executed and run on one or more processors of a computer, to perform the method according to any of claims 1 to 11.
